# EUROPÄISCHE PATENTANMELDUNG

(11) **EP 1 293 380 A2**
(43) Veröffentlichungstag der Anmeldung: **19.03.2003**
(21) Anmeldenummer: 02019266.2
(22) Anmeldetag: 28.08.2002
(51) Int. Cl.: B60Q 1/30

(54) **Hochgesetzte Bremsleuchte für Fahrzeuge, insbesondere Kraftfahrzeuge**

(30) Priorität: 15.09.2001 DE 10145528
(71) Anmelder: Schefenacker Vision Systems Germany GmbH & Co. KG, 73730 Esslingen (DE)
(72) Erfinder: Mertens, Jens, 70374 Stuttgart (DE)
(74) Vertreter: Kohl, Karl-Heinz

(57) **Zusammenfassung**

Bei Kraftfahrzeugen ist es bekannt, im Heckklappenbereich eine hochgesetzte Bremsleuchte (1) und am Kraftfahrzeug selbst Umfeldleuchten vorzusehen, um den Gepäckraum oder den Bodenbereich neben oder hinter dem Kraftfahrzeug auszuleuchten. Diese verschiedenen Leuchten werden gesondert montiert und an das Bordnetz des Kraftfahrzeuges angeschlossen. Damit die verschiedenen Leuchten kostengünstig gefertigt und montiert werden können, ist im Leuchtengehäuse (2) der hochgesetzten Bremsleuchte eine Umfeldleuchte untergebracht, die Licht in einer anderen Richtung abstrahlt als das Bremslicht (7, 7' bis 7"'). Dadurch müssen nur noch elektrische Anschlüsse (10), Stecker- und Kabelsätze für ein einziges Bauteil vorgesehen werden, so daß Montage- und Herstellungskosten gering gehalten werden können.

## Beschreibung

Die Erfindung betrifft eine hochgesetzte Bremsleuchte für Fahrzeuge, insbesondere für Kraftfahrzeuge, nach dem Oberbegriff des Anspruches 1.

Es sind hochgesetzte Bremsleuchten bekannt, die an einer Heckklappe des Kraftfahrzeuges befestigt sind. Darüber hinaus ist bekannt, am Kraftfahrzeug Umfeldleuchten vorzusehen, um beispielsweise den Gepäckraum oder den Kofferraum des Kraftfahrzeuges oder den Bodenbereich neben oder hinter dem Kraftfahrzeug auszuleuchten. Die verschiedenen Leuchten werden gesondert montiert und an das Bordnetz des Kraftfahrzeuges angeschlossen. Hierfür sind für jede Leuchte elektrische Anschlüsse, Stecker und Kabelsätze notwendig.

Der Erfindung liegt die Aufgabe zugrunde, die gattungsgemäße hochgesetzte Bremsleuchte so auszubilden, daß sie bei konstruktiv einfacher Ausbildung kostengünstig gefertigt und montiert werden kann.

Diese Aufgabe wird bei der gattungsgemäßen Bremsleuchte erfindungsgemäß mit den kennzeichnenden Merkmalen des Anspruches 1 gelöst.

Die erfindungsgemäße Bremsleuchte weist nicht nur das Bremslicht, sondern auch die Umfeldleuchte auf. Infolge der Integration der Umfeldleuchte in die hochgesetzte Bremsleuchte müssen nur noch elektrische Anschlüsse, Stecker und Kabelsätze für ein Einbauteil vorgesehen werden. Dadurch wird die Montage der erfindungsgemäßen Bremsleuchte wesentlich vereinfacht. Die Montage- und Herstellungskosten können darum gering gehalten werden. Die Bremsleuchte dient nicht nur als Signalleuchte für den nachfolgenden Verkehr, sondern kann auch das Umfeld des Kraftfahrzeuges im Bedarfsfall ausleuchten, beispielsweise den Innenraum des Kraftfahrzeuges oder den Gepäckraum oder den Kofferraum. Insbesondere ist es möglich, mit der Umfeldleuchte den Bodenbereich unmittelbar hinter dem Kraftfahrzeug auszuleuchten, wenn die Heckklappe des Kraftfahrzeuges geöffnet wird.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher beschrieben. Es zeigen
- Fig. 1: eine Rückansicht einer erfindungsgemäßen Bremsleuchte,
- Fig. 2: eine Draufsicht auf die Bremsleuchte nach Fig. 1,
- Fig. 3 und 4: die Bremsleuchte nach den Fig. 1 und 2 in unterschiedlichen perspektivischen Darstellungen,
- Fig. 5: in vergrößerter Darstellung die erfindungsgemäße Bremsleuchte ohne Leuchtengehäuse,
- Fig. 6: die Bremsleuchte ohne Leuchtengehäuse in perspektivischer Darstellung,
- Fig. 7: in schematischer Darstellung einen Querschnitt durch die erfindungsgemäße Bremsleuchte gemäß den Fig. 1 bis 7 in der Einbaulage,
- Fig. 8: in einer Darstellung entsprechend Fig. 7 eine zweite Ausführungsform einer erfindungsgemäßen Bremsleuchte,
- Fig. 9: in schematischer Darstellung die erfindungsgemäße Bremsleuchte, die an einer Heckklappe eines Kraftfahrzeuges montiert ist, bei geschlossener und geöffneter Stellung der Heckklappe.

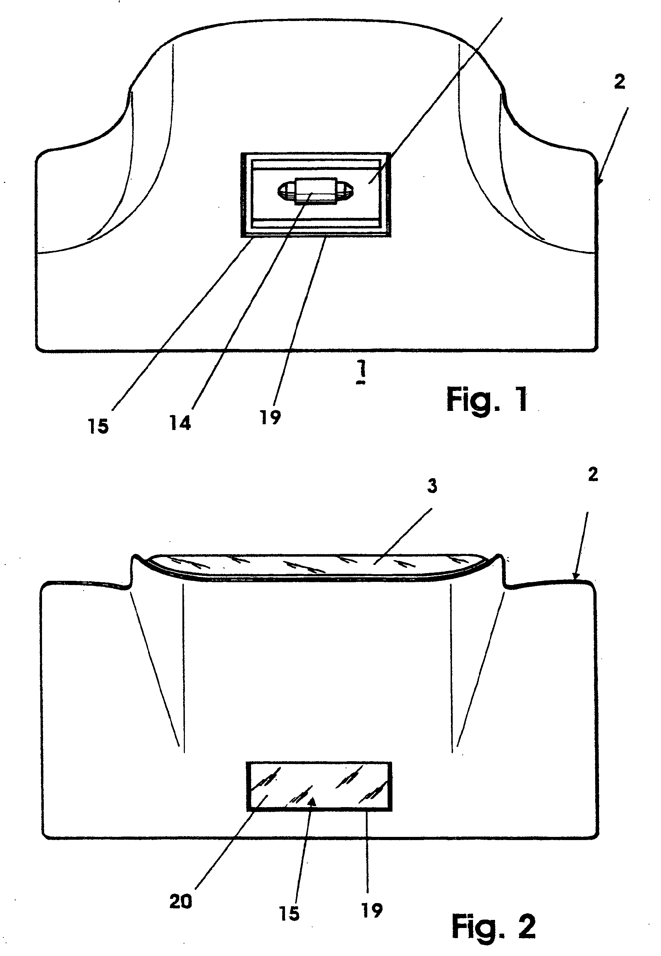

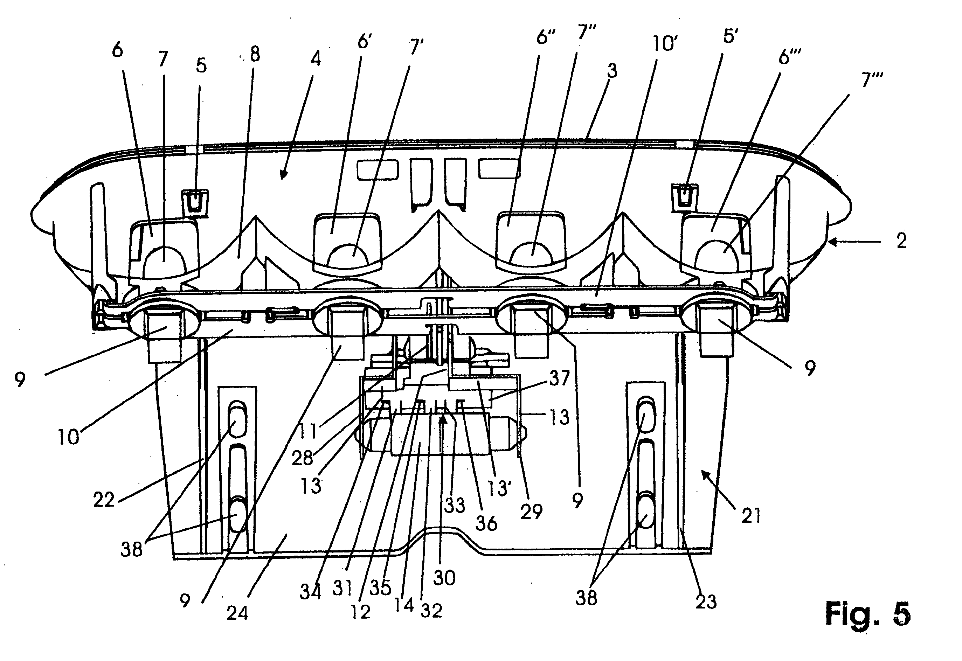

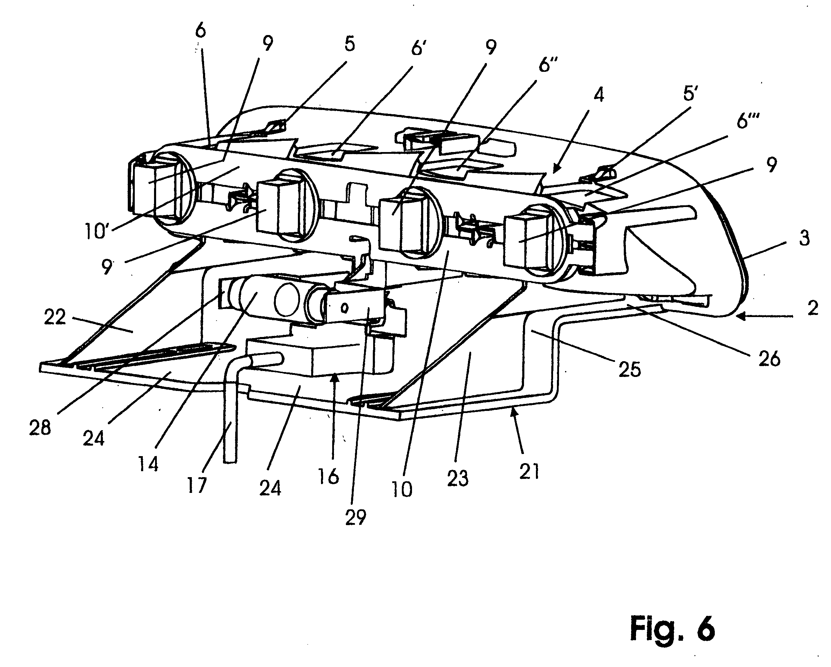

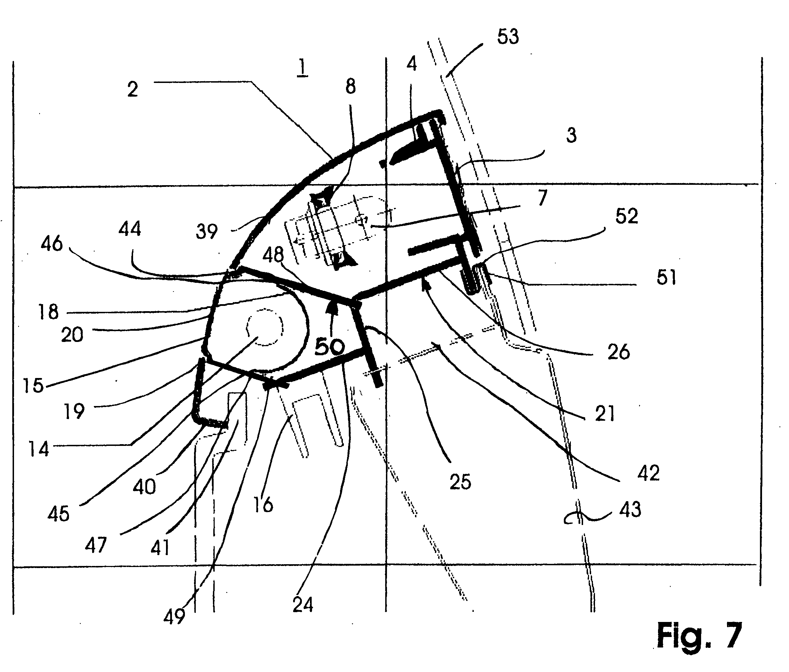

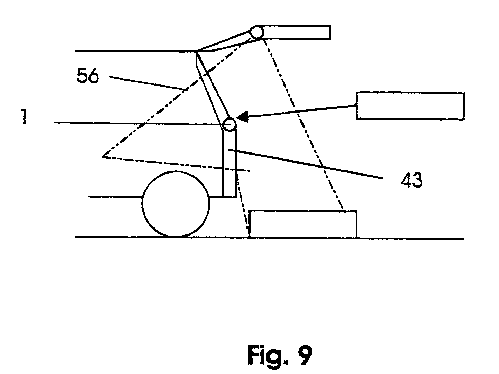

Die in den Fig. 1 bis 7 dargestellte hochgesetzte Bremsleuchte 1 ist für Kraftfahrzeuge mit einem Steilheck 43 vorgesehen (Fig. 7 und 9). Sie wird hinter der Heckscheibe 53 an der Heckklappe 43 des Kraftfahrzeuges in Höhe der Bordkante oder des oberen Randes der Heckklappe angeordnet. Die Bremsleuchte 1 hat ein Leuchtengehäuse 2 mit einer Öffnung, die mit einer Lichtscheibe 3 abgedeckt ist. Sie kann rot eingefärbt sein. Es ist aber auch möglich, eine glasklare Lichtscheibe zu verwenden, hinter der sich ein Farbfilter befindet, das dafür sorgt, daß durch die glasklare Lichtscheibe rotes Licht nach hinten austritt. Es ist auch möglich, als Leuchtmittel rot strahlende LEDs zu verwenden. Das Gehäuse 2 nimmt ein Reflektorgehäuse 4 auf, an dem die Lichtscheibe 3 beispielsweise mit Rastgliedern 5, 5' gehalten ist. Das Reflektorgehäuse 4 zusammen mit der Lichtscheibe 3 bildet ein geschlossenes Gehäuse, in das Leuchtmittel 7, 7' bis 7''' ragen. Diese Leuchtmittel können Glühlampen oder LEDs sein. Im folgenden werden als Leuchtmittel Glühlampen angegeben, an deren Stelle selbstverständlich auch andere Leuchtmittel, wie etwa LEDs, verwendet werden können. Das Reflektorgehäuse 4 ist in Höhe der Glühlampen 7, 7' bis 7"' mit Belüftungsöffnungen 6, 6' bis 6''' versehen, durch die beim Betrieb der Bremsleuchte entstehende Wärme abgeführt werden kann. Die Glühlampen 7, 7' bis 7''' liegen vor jeweils einer Reflektorfläche 8 des Reflektorgehäuses 4 (Fig. 5), welche das von den Glühlampen ausgehende Licht nach vorn zur Lichtscheibe 3 lenkt. Die Glühlampen 7, 7' bis 7"' sitzen jeweils in einem Lampenträger 9 (Fig. 5 und 6), der entgegengesetzt zur Lichtscheibe 3 nach hinten durch entsprechende Öffnungen im Reflektorgehäuse 4 ragt. Die Lampenträger bzw. -fassungen sind in bekannter Weise am Reflektorgehäuse 4 befestigt.

Sämtliche Glühlampen 7, 7' bis 7"' haben eine elektrische Zuleitung 10, die durch einen Blechstreifen gebildet ist und sich quer zur Achse der Lampenträger 9 erstreckt. Im Ausführungsbeispiel verläuft diese Zuleitung 10 außerhalb des Reflektorgehäuses 4 parallel zur Lichtscheibe 3.

Parallel zu dem flachen Blechstreifen 10, der die Stromzuführung zu den Glühlampen 7, 7' bis 7"' ermöglicht, sind die Lampenträger 9 mit einem Massekontakt 10' versehen, der ebenfalls streifenförmig aus Blech besteht und mit geringem Abstand neben der Zuleitung 10 verläuft. Wie die Fig. 5 und 6 zeigen, liegen die Zuleitung 10 und der Massekontakt 10' parallel zueinander. Der Massekontakt 10' befindet sich ebenfalls außerhalb des Reflektorgehäuses 4 auf der von der Lichtscheibe 3 abgewandten Seite.

Das Reflektorgehäuse 4 sitzt auf wenigstens einem Träger 21, der einstückig mit dem Reflektorgehäuse 4 ausgebildet sein kann. Es ist aber auch möglich, das Reflektorgehäuse 4 als gesonderte Baueinheit auf dem Träger 21 zu befestigen. Wie Fig. 6 zeigt, ist der Träger Z-förmig ausgebildet und erstreckt sich über den größten Teil der Länge des Reflektorgehäuses 4. Zur Versteifung des Trägers 21 sind nahe seinen beiden Enden senkrecht zu ihm sich erstreckende Stützen 22, 23 vorgesehen, die in Seitenansicht etwa dreieckförmig ausgebildet sind. Die Stützen 22, 23 stehen senkrecht auf dem einen Schenkel 24 des Trägers 21 und erstrecken sich bis zu einem Zwischensteg 25, der senkrecht zum Schenkel 24 liegt und ihn mit einem weiteren Schenkel 26 verbindet, auf dem das Reflektorgehäuse angeordnet ist. Die Stützen 22, 23 erstrecken sich senkrecht zum Schenkel 24 und zum Zwischensteg 25 und verjüngen sich in Richtung auf das freie Ende des Schenkels 24. Der Träger 21 ist vorteilhaft einstückig ausgebildet. Seine beiden auf unterschiedlichen Höhen liegenden Schenkel 24, 26 sowie der Zwischensteg 25 sind jeweils eben.

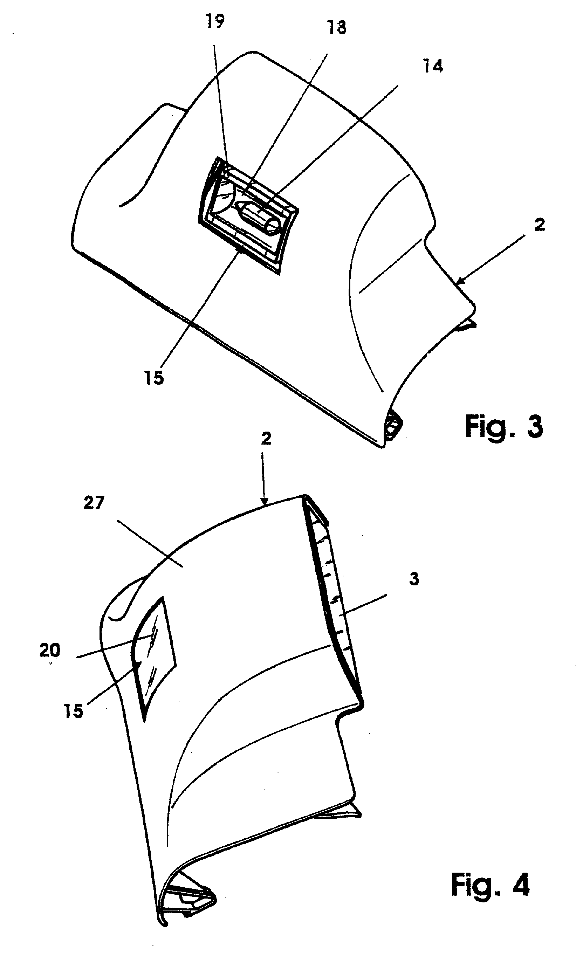

Im Bereich zwischen den beiden seitlichen Stützen 22, 23 des Trägers 23 befindet sich ein Reflektor 18 (Fig. 1), der ein weiteres Leuchtmittel 14, wie eine Glühlampe oder LED, umgibt. Der Reflektor 18 sitzt hinter einer Gehäuseöffnung 19, die in einer Rückwand 27 des Leuchtengehäuses 2 untergebracht ist. Diese Gehäuseöffnung 19 ist durch eine Lichtscheibe 20 (Fig. 2 und 4) verschlossen. Diese Lichtscheibe 20 kann farblos oder auch eingefärbt sein. Wie sich aus den Fig. 2 und 4 ergibt, treten die vom Leuchtmittel 14 ausgesandten Strahlen in einer anderen Richtung aus dem Leuchtengehäuse 2 nach außen als die von den Leuchtmitteln 7, 7' bis 7''' durch die Lichtscheibe 3 ausgesandten Strahlen. Die Gehäuseöffnung 19 hat im Ausführungsbeispiel rechteckigen Umriß und ist wesentlich kleiner als die Öffnung des Gehäuses 2, die durch die Lichtscheibe 3 abgedeckt ist. Im Ausführungsbeispiel ist die gesamte, in Fahrtrichtung des Kraftfahrzeuges nach hinten gerichtete Seite des Gehäuses 2 durch die Lichtscheibe 3 gebildet.

Anstelle der einzigen Gehäuseöffnung 19 können im Leuchtengehäuse 2 weitere Öffnungen vorgesehen sein, in denen jeweils ein Leuchtmittel angeordnet ist. Das Leuchtmittel 14 mit dem Reflektor 18 und der Lichtscheibe 20 bildet eine Umfeldleuchte 15, die optisch von den Glühlampen 7, 7' bis 7"' im Reflektorgehäuse 4 getrennt ist.

Der Reflektor 18 läßt sich auf dem Träger 21 einfach und zuverlässig befestigen.

Das Leuchtmittel 14 wird zwischen einem Kontaktblech 28 und einem Massekontakt 29 gehalten. Er ist aus einem Blechstreifen gebildet, der aus dem Massekontaktblech 10' für die Glühlampen 7, 7' bis 7''' herausgebogen ist.

Wie Fig. 5 zeigt, ist für die Glühlampen 7, 7' bis 7"' und das Leuchtmittel 14 ein gemeinsamer Steckeranschluß 30 vorgesehen, der dreipolig ausgebildet ist. Er hat drei Kontaktzungen 31 bis 33, auf die ein einziger dreipoliger Stecker 16 (Fig. 6) gesteckt wird, der mit einer elektrischen Zuleitung 17 versehen ist. Die Kontaktzunge 31 ist dem Kontaktblech 28, die Kontaktzunge 32 dem Kontaktblech 10 und die Kontaktzunge 33 den Massekontakten 10', 29 zugeordnet. Wenn darum der Stecker 16 auf den Anschluß 30 gesteckt wird, werden sowohl die Glühlampen 7, 7' bis 7"' als auch das Leuchtmittel 14 mit dem notwendigen Strom versorgt.

Das Kontaktblech 28 ist Z-förmig ausgebildet und hochkant im Verhältnis zum Kontaktblech 10 der Glühlampen 7, 7' bis 7"' angeordnet.

Die Kontaktzunge 32 ist einstückig mit der Kontaktzunge 10 ausgebildet und wird durch einen aus ihr herausgebogenen Steg 11 gebildet, der sich senkrecht zum Kontaktblech 10 erstreckt.

Der Massekontakt 29 ist ebenfalls Z-förmig ausgebildet und durch einen aus dem Masseblech 10' herausgebogenen Steg 12 gebildet. Aus diesem Steg 12 ist die Kontaktzunge 32 herausgebogen. Wie Fig. 5 zeigt, sind das Kontaktblech 28 und der Massekontakt 29 etwa spiegelbildlich zueinander angeordnet, wobei die Mittelstege 13.13' vorteilhaft in einer gemeinsamen Ebene liegen, die im Ausführungsbeispiel parallel zu der die beiden Kontakte 10, 10' enthaltenden Ebene liegt. Aus dem Massekontakt 29 ist die Kontaktzunge 33 herausgebogen.

Sämtliche Kontaktzungen 31 bis 33 liegen im Ausführungsbeispiel in einer gemeinsamen Ebene und ragen durch Schlitze 34 bis 36, die in einem am Träger 21 vorgesehenen Halter 37 vorgesehen sind. Er ist vorteilhaft einstückig mit dem Träger 21 vorgesehen und am Zwischensteg 25 des Trägers 21 angeordnet. Der Halter 37 steht vom Zwischensteg 25 quer ab, so daß der Stecker 16 einfach auf ihn gesteckt werden kann.

Über die Leitung 17 ist der Stecker 16 an eine Strom/Spannungsquelle des Kraftfahrzeuges angeschlossen. Mit dem einzigen Stecker 16 werden sowohl die Glühlampen 7, 7' bis 7"' als auch das Leuchtmittel 14 mit dem notwendigen Strom versorgt.

Ist die Heckklappe 43 des Kraftfahrzeuges geschlossen, dann ist die Lichtscheibe 3 in Fahrtrichtung nach hinten gerichtet, so daß bei einem Bremsvorgang nachfolgende Verkehrsteilnehmer frühzeitig erkennen können, daß der Fahrer einen Bremsvorgang ausführt. Die Umfeldleuchte 15 ist in den Fahrzeuginnenraum gerichtet und kann ihn großflächig ausleuchten. Die Umfeldleuchte 15 wird durch einen Heckklappenkontakt beim Öffnen der Heckklappe oder durch einen separaten Schalter eingeschaltet, der direkt an der Bremsleuchte 1 vorgesehen sein kann. Vorteilhaft ist es, einen entsprechenden Schalter im Zugriffsbereich des Fahrers vorzusehen, so daß er bei Bedarf jederzeit die Umfeldleuchte ein- und ausschalten kann.

Wird die Heckklappe 43 des Kraftfahrzeuges geöffnet, dann beleuchtet die Umfeldleuchte 15 den Bodenbereich unmittelbar hinter dem Fahrzeug sowie den Gepäckraum (Fig. 9).

Vorteilhaft ist es, wenn die Umfeldleuchte 15 automatisch dann eingeschaltet wird, wenn die Heckklappe 43 des Kraftfahrzeuges geöffnet wird. In diesem Falle ist die Kontaktzunge 31 Teil eines (nicht dargestellten) Heckklappenkontaktes. Er ist so ausgebildet, daß er beim Öffnen der Heckklappe betätigt wird und auf diese Weise die Stromzuführung zum Leuchtmittel 14 der Umfeldleuchte 15 ermöglicht. Umgekehrt wird dieser Heckklappenkontakt 31 wieder geschlossen, wenn die Heckklappe geschlossen wird.

Mit dem Träger 21 läßt sich die Bremsleuchte 1 am Kraftfahrzeug einfach in der gewünschten Einbaulage befestigen. Hierzu ist der Schenkel 24 des Trägers 21 mit Durchgangsöffnungen 38 versehen, durch welche Befestigungsschrauben gesteckt werden können. Die Öffnungen 38 liegen benachbart zu den Stützen 22, 23 auf den einander zugewandten Seiten (Fig. 5).

Das Gehäuse 2 wird dann montiert, wenn die Glühlampen 7, 7' bis 7''' in die Fassungen 9 eingesetzt, die Lichtscheibe 3 am Reflektorgehäuse 4 befestigt und das Leuchtmittel 14 der Umfeldleuchte 15 eingesetzt ist. Dann läßt sich das als Abdeckhaube ausgebildete Gehäuse 2 von der von der Lichtscheibe 3 abgewandten Seite aufschieben und in geeigneter Weise lösbar befestigen. Damit sind sämtliche Bauteile der Bremsleuchte 1 in der Abdeckhaube zuverlässig gegen Beschädigung und/oder Verschmutzung geschützt.

Anstelle der beschriebenen Glühlampen 7, 7' bis 7"'; 14 können als Leuchtmittel auch beispielsweise LEDs verwendet werden.

Wie Fig. 7 zeigt, hat das Leuchtengehäuse 2 eine im Querschnitt gekrümmt verlaufende Oberseite 39, deren von der Lichtscheibe 3 abgewandter Rand 40 abgewinkelt ist und an einem Rand 41 im Einbaubereich 42 der Heckklappe 43 des Kraftfahrzeuges anliegt.

Der Reflektor 18 der Umfeldleuchte 15 ist im Querschnitt teilkreisförmig gebogen und mit abgewinkelten Längsrändern 44, 45 in Aufnahmen 46, 47 in Seitenwänden 48, 49 eines Gehäuses 50 der Umfeldleuchte 15 eingesetzt. Das Gehäuse 50 selbst ist am Träger 21 befestigt, vorzugsweise am Zwischensteg 25 und am Schenkel 24. Vorteilhaft ist das Gehäuse 50 lösbar am Träger 21 befestigt, so daß die Umfeldleuchte 15 einfach abgenommen werden kann. Die Außenseite der Lichtscheibe 20 der Umfeldleuchte 15 liegt vorzugsweise bündig mit der Außenseite des Gehäuses 2.

Da die Umfeldleuchte 15 eine gesonderte Baueinheit ist, kann sie einfach zusammengebaut und anschließend als ein Teil am Träger 21 befestigt werden. Vorteilhaft wird das Gehäuse 50 der Umfeldleuchte 15 lösbar am Träger 21 befestigt, dessen Schenkel 24 und Zwischensteg 25 das Gehäuse 50 an der der Lichtscheibe 20 gegenüberliegenden Seite verschließen.

Wie Fig. 7 zeigt, kann die Blinkleuchte 1 mit Steckklammern 51 an einem Rand 52 der Heckklappe 43 hinter der Heckscheibe 53 befestigt werden.

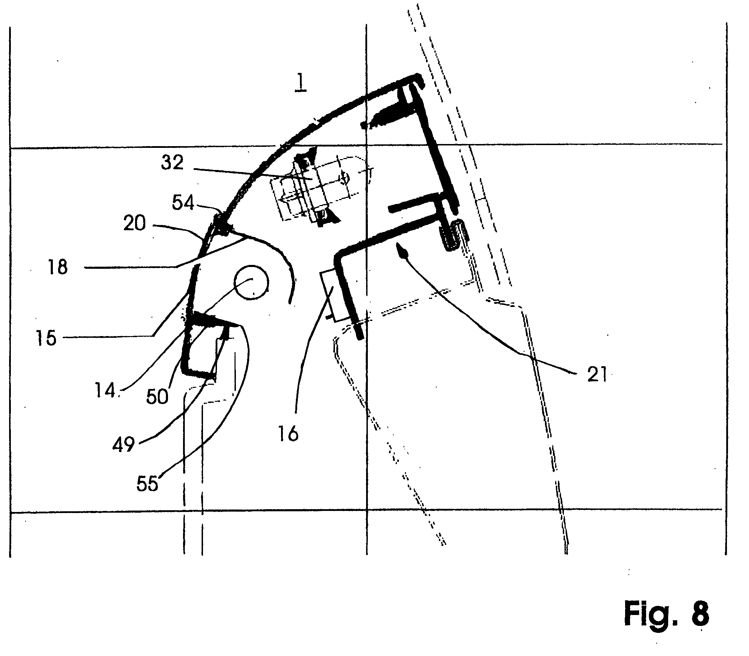

Bei der Ausführungsform gemäß Fig. 8 ist das Gehäuse 50 der Umfeldleuchte 15 nicht geschlossen, sondern an der der Lichtscheibe 20 gegenüberliegenden Seite offen. Die Lichtscheibe 20 ist an ihrer Innenseite mit einer Steckaufnahme 54 versehen, in die der Reflektor 18 mit einem Rand gesteckt ist. Er umgibt das Leuchtmittel 14 der Umfeldleuchte 15 teilweise und endet mit Abstand vom freien Rand 55 der Seitenwand 49 des Gehäuses 50.

Der Träger 21 ist im Querschnitt im wesentlichen L-förmig ausgebildet. Im Unterschied zur Ausführungsform nach den Fig. 1 bis 7 fehlt dem Träger 21 der Schenkel 24. Im übrigen ist die Ausführungsform nach Fig. 8 gleich ausgebildet wie das vorige Ausführungsbeispiel. Die Umfeldleuchte 15 ist als gesonderte Baueinheit vorgesehen, die vor dem Einbau in die Heckleuchte 1 einfach zusammengebaut werden kann. Sie läßt sich anschließend problemlos an der Heckleuchte 1 befestigen.

Fig. 9 zeigt schematisch die Lagen der Heckleuchte 1 an der Heckklappe 43 des Kraftfahrzeuges. Beim Betätigen des Bremspedales leuchten die Glühlampen 7, 7' bis 7"' auf und strahlen in Fahrtrichtung nach hinten durch die Heckscheibe 53 der Heckklappe 43 ab.

Wird die Heckklappe geöffnet, dann wird über den Heckklappenkontakt beim Hochschwenken der Heckklappe 43 die Umfeldleuchte 15 eingeschaltet. Sie ist so an der Bremsleuchte 1 vorgesehen, daß das von ihr ausgesandte Licht 56, dessen Strahlbereich durch eine strichpunktierte Linie angegeben ist, teilweise in das Fahrzeuginnere sowie auf den Boden unmittelbar hinter dem Kraftfahrzeug fällt. Dadurch wird der Bodenbereich hinter dem Kraftfahrzeug ausgeleuchtet, was insbesondere in der Dunkelheit von Vorteil ist. Da bei hochgeklappter Heckklappe 43 dieser Bodenbereich beleuchtet wird, können beispielsweise Gepäckstücke in diesen beleuchteten Bodenbereich abgesetzt werden, ohne daß die Gefahr besteht, daß sie beim Absetzen verschmutzen.

## Patentansprüche

1. Hochgesetzte Bremsleuchte für Fahrzeuge, insbesondere Kraftfahrzeuge, mit einem Leuchtengehäuse, in dem mindestens ein Bremslicht untergebracht ist, das hinter einer Lichtscheibe liegt,
**dadurch gekennzeichnet, daß** im Leuchtengehäuse (2) mindestens eine Umfeldleuchte (15) untergebracht ist, die Licht (56) in einer anderen Richtung abstrahlt als das Bremslicht (7, 7' bis 7''').

2. Bremsleuchte nach Anspruch 1,
**dadurch gekennzeichnet, daß** die Umfeldleuchte (15) mindestens ein Leuchtmittel (14) aufweist.

3. Bremsleuchte nach Anspruch 1 oder 2,
**dadurch gekennzeichnet, daß** die Umfeldleuchte (15) mindestens eine Lichtscheibe (20) und/oder einen Reflektor (18) aufweist.

4. Bremsleuchte nach einem der Ansprüche 1 bis 3,
**dadurch gekennzeichnet, daß** die Umfeldleuchte (15) eine Baueinheit ist, die mit der Bremsleuchte (1) verbindbar ist.

5. Bremsleuchte nach einem der Ansprüche 1 bis 4,
**dadurch gekennzeichnet, daß** die Umfeldleuchte (15) ein, vorteilhaft lösbar an der Bremsleuchte (1) befestigtes Gehäuse (50) aufweist, in dem das Leuchtmittel (14) und/oder der Reflektor (18) untergebracht sind.

6. Bremsleuchte nach einem der Ansprüche 1 bis 5,
**dadurch gekennzeichnet, daß** die Bremsleuchte (1) einen Träger (21) aufweist, an dem das Gehäuse (50) der Umfeldleuchte (15) gehalten ist.

7. Bremsleuchte nach Anspruch 6,
**dadurch gekennzeichnet, daß** am Träger (21) ein Reflektorgehäuse (4) gehalten ist, in dem das Bremslicht (7, 7' bis 7"') untergebracht und an dem vorteilhaft das Leuchtengehäuse (2) angeordnet ist.

8. Bremsleuchte nach einem der Ansprüche 1 bis 7,
**dadurch gekennzeichnet, daß** die Umfeldleuchte (15) im Leuchtengehäuse (2) gehalten ist.

9. Bremsleuchte nach einem der Ansprüche 1 bis 8,
**dadurch gekennzeichnet, daß** das Leuchtengehäuse (2) wenigstens eine Öffnung (19) für den Durchtritt der von der Umfeldleuchte (15) ausgehenden Strahlen (56) aufweist.

10. Bremsleuchte nach einem der Ansprüche 7 bis 9,
**dadurch gekennzeichnet, daß** der Träger (21) mit Befestigungselementen (51), vorzugsweise Steckklammern, am Kraftfahrzeug gehalten ist.

11. Bremsleuchte, insbesondere nach einem der Ansprüche 1 bis 10,
**dadurch gekennzeichnet, daß** die Bremsleuchte (1) an einer Heckklappe (43) des Kraftfahrzeuges so angeordnet ist, daß bei geöffneter Heckklappe (43) das von der Umfeldleuchte (15) ausgesandte Licht (56) zumindest teilweise auf den Boden hinter dem Kraftfahrzeug fällt.

12. Bremsleuchte, insbesondere nach einem der Ansprüche 1 bis 11,
**dadurch gekennzeichnet, daß** die Bremsleuchte (1) an der Heckklappe (43) des Kraftfahrzeuges so angeordnet ist, daß bei geöffneter Heckklappe (43) zumindest ein Teil des von der Umfeldleuchte (15) ausgesandten Lichtes (56) in das Fahrzeuginnere, insbesondere in den Kofferraum bzw. Gepäckraum, fällt.

13. Bremsleuchte, insbesondere nach einem der Ansprüche 1 bis 12,
**dadurch gekennzeichnet, daß** das Bremslicht (7, 7' bis 7''') und das Leuchtmittel (14) der Umfeldleuchte (15) einen gemeinsamen Massekontakt (33) haben.

14. Bremsleuchte, insbesondere nach einem der Ansprüche 1 bis 13,
**dadurch gekennzeichnet, daß** für das Bremslicht (7, 7' bis 7''') und das Leuchtmittel (14) der Umfeldleuchte (15) ein gemeinsamer Steckeranschluß (30) vorgesehen ist.

15. Bremsleuchte nach einem der Ansprüche 1 bis 14,
**dadurch gekennzeichnet, daß** die Lichtscheibe (3) der Bremsleuchte (1) und die Lichtscheibe (20) der Umfeldleuchte (15) an einander gegenüberliegenden Seiten des Leuchtengehäuses (2) vorgesehen sind, und daß vorteilhaft die Lichtscheibe (20) der Umfeldleuchte (15) kleiner ist als die Lichtscheibe (3) für das Bremslicht (7, 7' bis 7"').
